# EUROPÄISCHE PATENTSCHRIFT

(11) **EP 1 151 674 B1**
(45) Veröffentlichungstag und Bekanntmachung des Hinweises auf die Patenterteilung: **04.08.2004**
(21) Anmeldenummer: 01102550.9
(22) Anmeldetag: 06.02.2001
(51) Int. Cl.: A23K 1/10, A23K 1/18, A01K 15/02

(54) **Hunde-Kauknochen und Verfahren zu seiner Herstellung**
Dog chew and process for making same
Os à ronger pour chien et procédé pour sa préparation

(30) Priorität: 03.05.2000 DE 10021432
(43) Veröffentlichungstag der Anmeldung: 07.11.2001
(73) Patentinhaber: Jericho's Tiernahrungs GmbH, 35282 Rauschenberg (DE)
(72) Erfinder: Jericho, Dieter, 35260 Stadtallendorf (DE)
(74) Vertreter: Olbricht, Karl Heinrich, Dipl.-Phys.

(56) Entgegenhaltungen:
- CH-A- 676 200
- DE-U- 9 413 849
- GB-A- 2 095 970
- US-A- 4 260 635
- US-A- 5 897 893
- US-A- 6 060 100

## Beschreibung

Die Erfindung betrifft ein Verfahren zum Herstellen von Hunde-Kauknochen gemäß dem Oberbegriff von Anspruch 1.

Der Vorliebe von Hunden für das Beißen auf Gegenstände, die für sie möglichst angenehm und schadlos sind, kommen dauerhafte Kauknochen entgegen, die aber nicht zu hart sein dürfen, damit namentlich bei ganz jungen oder auch alten Hunden keine Gebißschäden entstehen. Wenn ein Kauknochen ganz oder in gröberen Bruchstücken verschluckt wird, können gesundheitsschädliche oder gar bedrohliche Folgen eintreten.

Laut DE 691 27 295 T2 wird zur Erzeugung eines brauchbaren Kauknochens eine Mischung aus Labcasein und Gelatine mit Geschmacks- und Farbzusätzen durch Dampfbehandlung auf einen vorbestimmten Feuchtigkeits-Gehalt (10 bis 30%) eingestellt und nach Formgebung, beispielsweise durch Spritzgießen und gegebenenfalls mit anschließender Mikrowellen-Behandlung, dicht abgepackt. Solche Knochen erfordem einen beträchtlichen Fertigungsaufwand.

Für anderes Hundefutter von Knochenform wird in EP 0 558 774 B1 vorgeschlagen, einen Strang warm zu extrudieren, der eine Teig-Außenhülle und eine Innenfüllung z.B. aus einem Gemisch von Faser- und Fettstoffen mit diversen Zusätzen aufweist. Noch vor dem Erkalten wird der Strang abgelängt und an beiden Enden gestaucht. Die Herstellung derartiger Körper ist gleichfalls aufwendig, vor allem auch wegen der besonderen Teig-Aufbereitung.

Ein weiteres Knochen-Imitat ist in DE 94 13 849 U1 beschrieben. Es ist ebenfalls zweiteilig aufgebaut und weist einen an beiden Enden verdickten Außenhaut-Steg auf, der eine als Quader geformte Pastete umhüllt. Diese ist eine feinstückige Mischung hauptsächlich aus Rinderhaut mit geringem Zusatz von Rinderpansen. Der Steg besteht aus einem gewickelten, rechteckig gestanzten Rinderhaut-Abfallstück. Die Herstellung setzt eine spezielle Verarbeitung von zweierlei Material mit unterschiedlichen mechanischen Eigenschaften voraus und ist daher mit größerem Aufwand verbunden.

Aus CH 676 200 A ist zu entnehmen, daß Hunde-Kauknochen mit einem trockenen, harten und mit mindestens einem zahn- und maulpflegenden Wirkstoff imprägnierten Substrat aus Tierhaut, z.B. Rinderhaut, hergestellt werden können.

GB 2 095 970 A beschreibt ein bis zu 66 Gew.-% Rinderpansen und Kaldaunen (Kutteln) eines Wiederkäuers enthaltendes Haustierfutter, dessen Feuchtigkeitsgehalt unter 35 Gew.-% liegt und dem im übrigen Mischbestandteile von Cerealien, Gemüseund Fleischprodukten sowie Vitamin-, Mineral- und Aromastoffe zugesetzt sind.

Aufgabe der Erfindung ist es, eine alternative Zusammensetzung für einen dadurch verbesserten, möglichst einfachen Hunde-Kauknochen zu finden. Er soll auf wirtschaftliche Weise herstellbar und problemlos verwendbar sein, vor allem aber auch erhöhten ökologischen Ansprüchen genügen.

Hauptmerkmale des Herstellungsverfahrens nach der Erfindung sind in Anspruch 1 angegeben. Ausgestaltungen sind Gegenstand der Ansprüche 2 bis 6.

Wesentlich ist für die Herstellung des ausschließlich aus Rinderpansen bestehenden, insbesondere in Form eines Knochenimitats gestalteten Hunde-Kauknochens gemäß Anspruch 1, daß man Rinderpansen-Stücke im Abmessungs-Bereich von 1 cm bis 50 cm - bevorzugt von 2 cm bis 30 cm - rollt, passend ablängt und einstückig preßt. Mithin sind keine sonstigen Zerkleinerungs-Vorgänge erforderlich. Vielmehr genügt es, Rinderpansen-Stücke geeigneter Größe zu rollen und in der gewünschten Länge auf Form zu pressen. Es ergibt sich gegenüber den bisherigen Methoden eine große Vereinfachung und Verbilligung. Das erzeugte Produkt ist naturrein und frei von Hilfs- oder Farbstoff-Zusätzen Es kommt ohne Konservierungsmittel aus, besitzt aber dennoch je nach Lagerungs-Bedingungen eine Langzeit-Haltbarkeit von z.B. 12 bis 24 Monaten. Die einstückige Gestaltung des Kauknochens trägt maßgeblich zu kostengünstiger Herstellung bei. Das neue Produkt unterscheidet sich damit überaus vorteilhaft von üblichen Erzeugnissen, die allgemein eine Umhüllung bzw. Haut aufweisen. Eine solche muß prinzipiell chemisch behandelt werden, so daß bislang ein Eindringen bzw. Zurückbleiben schädlicher oder sogar giftiger Reste nicht immer ausgeschlossen werden konnte. Dagegen wird im praktischen Gebrauch des neuartigen Hunde-Kauknochens nicht nur eine Hülle, sondern außerdem ein Herausquellen von Füllungs-Teilen vermieden, das bei herkömmlichen Produkten zu unangenehmer Reste-Verbreitung und Verschmutzung führen konnte.

Weitere Vorteile erzielt man laut Anspruch 2 dadurch, daß man den Kauknochen nach dem Preßvorgang bei ca. 60 °C bis 70 °C in einer Langzeit-Behandlung von z.B. 24 h bis 36 h entfeuchtet, vorzugsweise bis zu einer Restfeuchte von 8% bis 14%, und daß man ihn abschließend bei bis zu 120 °C während ca. 20 min bis 30 min sterilisiert. So ist eine Langzeit-Haltbarkeit auf einfache Weise und ohne Zusatz von Fremdstoffen sichergestellt, und zwar bei gleichzeitiger Verbesserung der Gebrauchs-Eigenschaften.

Bei der Weiterbildung nach Anspruch 3 bestimmt man die Oberflächen-Beschaffenheit des Hunde-Kauknochens durch die Vorgabe, welche Seite des Pansenstücks am Kauknochen außen liegt. Während es herkömmlich einer speziellen Bearbeitung bedurfte, um eine rauhe Kauknochen-Oberfläche zu erhalten, kann man dies im Einklang mit Anspruch 4 auf sehr einfache Weise mit Hilfe der nach außen gewendeten Pansen-Innenseite bewirken. Wahlweise läßt sich nach Anspruch 5 aber auch mittels der Pansen-Außenseite eine glatte Kauknochen-Oberfläche erzielen, wiederum ohne einen zusätzlichen Arbeitsgang.

Dank der Erfindung ist es gemäß Anspruch 6 leicht möglich, Farbe und Geschmack des Kauknochens einfach durch Wahl von gebrühtem oder ungebrühtem Ausgangsmaterial einzustellen. Bei Einsatz von gebrühtem Pansen bekommt man einen "weiweißen" Kauknochen, dessen Farbe von hellbeige bis braun variieren kann. Hingegen entsteht bei Verwendung von ungebrühtem Pansen ein eher dunkelbrauner bis schwärzlicher Kauknochen.

Weitere Merkmale, Einzelheiten und Vorteile der Erfindung gehen aus der folgenden beispielhaften Ausführungs-Beschreibung hervor.

Natürlicher Rinderpansen, der wahlweise gebrüht oder ungebrüht sein kann, wird zunächst als gekühltes Ausgangsmaterial mit einer Temperatur von beispielsweise 2 °C bis 5 °C angeliefert. Es erwärmt sich bei der anschließenden Bearbeitung allmählich bis auf Raumtemperatur. Die Pansenstücke werden eingerollt und von Hand oder automatisch in Stücke geeigneter Große geschnitten, je nach gewunschtem Knochenmaß z.B. auf etwa 2 cm bis 30 cm Länge. Die Rollteile werden anschließend in eine Hydraulikpresse eingebracht, deren Form zuvor eingefettet wurde, um nach dem Preßvorgang eine saubere Entformung zu gewährleisten. Die herauskommenden Produkte werden in einer Langzeit-Nachbehandlung von z.B. 24 h bis 36 h entfeuchtet, vorzugsweise bis zu einer Restfeuchte von 8% bis 14%, und abschließend bei bis zu 120 °C sterilisiert. Danach sind sie frei von Erregern wie Schimmelpilzen, Salmonellen o.dgl. und unmittelbar fertige Kauknochen, deren Farbe und Geschmack davon abhängt, ob gebrühter oder ungebrühter Pansen verwendet wurde.

Weil zu ihrer Herstellung keinerlei chemische Mittel oder Zusatzstoffe benötigt werden, sind die so erzeugten Hunde-Kauknochen reine, nahrhafte Natur- bzw. Bioprodukte. Die verschiedensten Größen sind herstellbar; typisch sind z.B. kleine Kauknochen etwa 5 cm bis 10 cm lang und etwa 1 cm bis 3 cm dick. Zum mechanischen Versandschutz und/oder zur Produkt-Kennzeichnung können die Kauknochen in vakuumverschweißten Folienbeuteln abgepackt werden.

Die Erfindung ist nicht auf die vorbeschriebenen Ausführungsformen beschränkt, sondem in vielfältiger Weise abwandelbar. Man erkennt jedoch, daß der Grundgedanke, Hunde-Kauknochen ausschließlich aus Rinderpansen herzustellen, in bevorzugtem Verfahren dadurch verwirklicht wird, daß man Rinderpansen-Stücke im Abmessungs-Bereich von 1 cm bis 50 cm - bevorzugt von 2 cm bis 30 cm - rollt, passend ablängt und einstückig preßt. Nach dem Preßvorgang wird der Kauknochen bei ca. 60 °C bis 70 °C in einer Langzeit-Behandlung von z.B. 24 h bis 36 h entfeuchtet, vorzugsweise bis zu einer Restfeuchte von 8% bis 14%. Abschließend sterilisiert man ihn bei bis zu 120 °C während ca. 20 min bis 30 min. Seine Oberflächen-Beschaffenheit wird dadurch bestimmt, welche Seite des Pansenstücks am Kauknochen außen liegt. Rauh ist die Oberfläche bei nach außen gewendeter Pansen-Innenseite. Alternativ kann man mit der Pansen-Außenseite eine glatte Kauknochen-Oberfläche erhalten. Farbe und Geschmack des Kauknochens werden nach Bedarf durch Wahl von gebrühtem oder ungebrühtem Ausgangsmaterial eingestellt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verfahren zum Herstellen von ausschließlich aus Rinderpansen bestehenden Hunde-Kauknochen insbesondere in Form eines Knochenimitats, **dadurch gekennzeichnet, daß** man Rinderpansen-Stücke im Abmessungs-Bereich von 1 cm bis 50 cm, bevorzugt von 2 cm bis 30 cm, rollt, ablängt und einstückig preßt.

2. Verfahren nach Anspruch 1, **dadurch gekennzeichnet, daß** man den Kauknochen nach dem Preßvorgang bei ca. 60 °C bis 70 °C in einer Langzeit-Behandlung von z.B. 24 h bis 36 h entfeuchtet, vorzugsweise bis zu einer Restfeuchte von 8% bis 14%, und daß man ihn abschließend bei bis zu 120 °C während ca. 20 min bis 30 min sterilisiert.

3. Verfahren nach Anspruch 1 oder 2, **dadurch gekennzeichnet, daß** man die Oberflächen-Beschaffenheit des Hunde-Kauknochens durch die Vorgabe bestimmt, welche Seite des Pansenstücks am Kauknochen außen liegt.

4. Verfahren nach Anspruch 3, **dadurch gekennzeichnet, daß** von der nach außen gewendeten Pansen-Innenseite eine rauhe Kauknochen-Oberfläche gebildet wird.

5. Verfahren nach Anspruch 3, **dadurch gekennzeichnet, daß** von der Pansen-Außenseite eine glatte Kauknochen-Oberfläche gebildet wird.

6. Verfahren nach einem der Ansprüche 1 bis 5, **dadurch gekennzeichnet, daß** man Farbe und Geschmack des Kauknochens durch Wahl von gebrühtem oder ungebrühtem Ausgangsmaterial einstellt.

## Claims

1. Process for the manufacture of dog chews exclusively consisting of cattle rumen and in particular being bone-shaped, wherein pieces of cattle rumen having a range of dimension from 1 cm to 50 cm, preferably from 2 cm to 30 cm, are rolled up, cut into lengths and pressed to form one-piece bodies.

2. Process as defined in claim 1, wherein the chewing bone is dehumidified after the pressing process at about 60 °C to 70 °C in a longtime treatment of e. g. 24 h to 36 h, preferably to a residual moisture of 8 % to 14 %, and finally sterilized at up to 120 °C during about 20 min to 30 min.

3. Process as defined in claim 1 or 2, wherein the texture of the surface of the chewing bone for dogs is modified depending on the side of the piece of rumen which faces outwards.

4. Process as defined in claim 3, wherein the inner side of the rumen is made to face outwards so as to form a rough surface of the chewing bone.

5. Process as defined in claim 3, wherein a smooth surface of the chewing bone is obtained by means of the outer side of the rumen.

6. Process as defined in any one of claims 1 to 5, wherein the colour and the taste of the chewing bone are determined by using either scalded or non-scalded basic material.

## Revendications

1. Procédé pour la fabrication d'os à mâcher pour chiens constitués exclusivement de panse de boeuf, en particulier ayant le profil d'un os, **caractérisé par le fait qu'**on enroule des pièces de panse de boeuf de l'ordre de 1 cm à 50 cm, de préférence de 2 cm à 30 cm, les coupe à longueur et les soumet à un procédé de pressage pour obtenir un corps moulé d'une seule pièce.

2. Procédé selon la revendication 1, **caractérisé par le fait qu'**on déshumidifie l'os à mâcher après le procédé de pressage à environ 60 °C à 70 °C dans un traitement à long terme de p. ex. 24 h à 36 h, de préférence jusqu'à une humidité résiduelle de 8 % à 14 % et qu'on le stérilise, pour finir, pendant environ 20 min à 30 min à jusqu'à 120 °C.

3. Procédé selon la revendication 1 ou 2, **caractérisé par le fait que** la texture de la surface de l'os à mâcher pour chiens est modifiable à volonté en fonction de la pièce de la panse étant tournée vers l'extérieur de l'os à mâcher.

4. Procédé selon la revendication 3, **caractérisé par le fait que** l'os à mâcher obtient une surface rugueuse si la face interne de la panse est tournée vers l'extérieur.

5. Procédé selon la revendication 3, **caractérisé par le fait que** l'os à mâcher obtient une surface lisse par la face externe de la panse.

6. Procédé selon l'une des revendications 1 à 5, **caractérisé par le fait que** la couleur et la saveur de l'os à mâcher sont modifiables à volonté en fonction de l'utilisation d'une matière de base respectivement échaudée et non-échaudée.
